# EUROPEAN PATENT APPLICATION

(11) **EP 2 940 635 A1**
(43) Date of publication of application: **04.11.2015**
(21) Application number: 15162070.5
(22) Date of filing: 31.03.2015
(51) Int. Cl.: G06Q 10/10, G06F 17/30

(54) **USER TERMINAL APPARATUS FOR MANAGING DATA AND METHOD THEREOF**

(30) Priority: 30.04.2014 KR 20140052300
(71) Applicant: Samsung Electronics Co., Ltd., Suwon-si, Gyeonggi-do, 443-742 (KR)
(72) Inventor: Jung, Yeon-hee, Seoul (KR); Yun, Tae-jung, Seoul (KR); Choi, Chang-seok, Gyeonggi-do (KR)
(74) Representative: Taor, Simon Edward William

(57) **Abstract**

A method of managing data of a user terminal apparatus, a user terminal apparatus, and a non-transitory computer-readable medium for storing a method implementing the method are provided. The method includes photographing a first object where an identification marker is attached to, registering an account corresponding to the identification marker in a server apparatus, and in response to a second object to be connected to the first object being photographed within a predetermined time after the first object is photographed, storing a storage address of photographed data of the second object in an account corresponding to the identification marker.

## Description

A method and an apparatus relate to a user terminal apparatus and a method of connecting data of a user terminal apparatus. In particular, exemplary embodiments relate to a user terminal apparatus that provides a method of managing data using a quick response (QR) code, and a method thereof.

With the development of electronic technology, a type and a form of contents provided to a user are more varied for user convenience. For example, people are able to read a novel easily with an e-book without carrying a heavy book.

Due to the convenience of management and ease of portability, analog documents are gradually being changed to electronic documents. However, electronic documents may not be able to deliver intuitive information and provide familiarity as the analog documents do.

Thus, people may still keep, for example, a marked book, search the Internet for more information on the book, put reference material between pages of the book, and write an extract from another book on a corner of the book. However, it may be difficult and inconvenient to organize contents in this manner.

Some books provide a uniform resource locator (URL) of a website for providing a reference for each part, but it may be inconvenient to input every letter of the URL, and contents provided from the URL may not be what a reader of the book wants.

Accordingly, a method of managing information to solve the such problems is required.

Aspects of exemplary embodiments relate to a user terminal apparatus that provides a method of managing data using a quick response (QR) code and a method thereof.

According to an exemplary embodiment, a method of managing data of a user terminal apparatus includes photographing a first object where an identification marker is attached to, registering an account corresponding to the identification marker in a server apparatus, and in response to a second object to be connected to the first object being photographed within a predetermined time after the first object is photographed, storing a storage address of photographed data of the second object in an account corresponding to the identification marker.

The method of managing data of a user terminal apparatus may include in response to the identification marker being re-photographed, acquiring photographed data of the second object by using the storage address stored in the account, and displaying the photographed data of the second object.

The registering an account may include detecting the identification marker information by analyzing the identification marker from a photographed image of the first object, transmitting the identification marker information to the server apparatus, and generating the account in a pre-allocated server area for the identification marker.

The method of managing data of a user terminal apparatus may include performing authentication by transmitting intrinsic information of the user terminal apparatus to the server apparatus.

The method may include in response to a command to initialize the account being input, deleting data stored in the account.

The method may include in response to a command to print being input, printing a photographed image of the first object and a photographed image of the second object as a whole by using a printing apparatus connected to the user terminal apparatus.

The method may further include in response to data to be connected to the first object being input, storing the input data in the account, and in response to the identification marker being re-photographed, displaying the input data.

The method may further include in response to link information on a webpage to be connected to the first object being input, storing the input link information in the account, and in response to the identification marker being re-photographed, displaying the webpage corresponding to the input link information.

A user terminal apparatus according to an exemplary embodiment includes a photographing unit configured to photograph a first object where an identification marker is attached to, a controller configured to register an account corresponding to the identification marker in a server apparatus, and the controller in response to a second object to be connected to the first object being photographed within a predetermined time after the first object is photographed, stores a storage address of photographed data of the second object in an account corresponding to the identification marker.

The user terminal apparatus may further include a display, and the controller in response to the identification marker being re-photographed, may acquire photographed data of the second object by using the storage address stored in the account, and may control the display to display the photographed data of the second object.

The controller may detect identification marker information by analyzing the identification marker from a photographed image of the first object, transmit the detected marker information to the server apparatus, and generate the account in a pre-allocated server area for the identification marker.

The controller may perform authentication by transmitting intrinsic information of the user terminal apparatus to the server apparatus.

In response to a command to initialize the account being input, the controller may delete data stored in the account.

In response to a command to print being input, the controller may print a photographed image of the first object and a photographed image of the second object as a whole by using a printing apparatus connected to the user terminal apparatus.

In response to data to be connected to the first object being input, the controller may store the input data in the account, and in response to the identification marker being re-photographed, may display the input data.

In response to link information on a webpage to be connected to the first object being input, the controller may store the input link information in the account, and in response to the identification marker being re-photographed, may display the webpage corresponding to the input link information.

With respect to a recording medium configured to store a program to perform a method of managing data of a user terminal apparatus, the method of managing data of the user terminal apparatus includes photographing a first object where an identification marker is attached to, registering an account corresponding to the identification marker in a server apparatus, and in response to a second object to be connected to the first object being photographed within a predetermined time after the first object is photographed, storing a storage address of photographed data of the second object in an account corresponding to the identification marker.

The above and/or other aspects of the present disclosure will be more apparent by describing certain present disclosure with reference to the accompanying drawings, in which:
FIG. 1 is a view illustrating a data management system according to an exemplary embodiment;
FIG. 2 is a view illustrating use of an identification marker according to an exemplary embodiment;
FIG. 3 is a block diagram illustrating a user terminal apparatus according to an exemplary embodiment;
FIGS. 4 to 5 are views illustrating a user interface (UI) screen of a user terminal apparatus according to an exemplary embodiment;
FIG. 6 is a block diagram illustrating a server apparatus according to an exemplary embodiment;
FIG. 7 is a flow chart illustrating a method of managing data of a user terminal apparatus according to an exemplary embodiment;
FIG. 8 is a view illustrating a method of managing data of a user terminal apparatus according to still another exemplary embodiment; and
FIG. 9 is a block diagram illustrating a user terminal apparatus in detail according to an exemplary embodiment.

Hereinafter, exemplary embodiments will be described in detail with reference to the accompanying drawings.

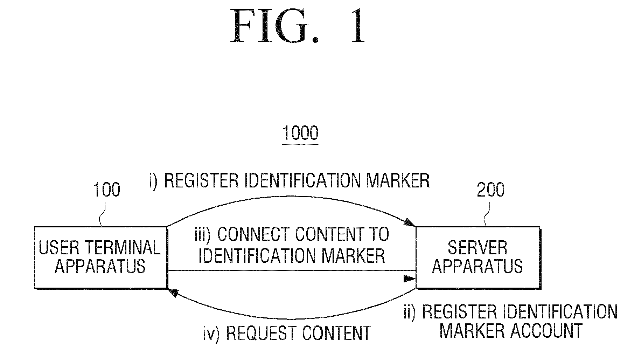

FIG. 1 is a view illustrating a data management system 1000 according to an exemplary embodiment. As illustrated in FIG. 1, the data management system 1000 may include a user terminal apparatus 100 and a server apparatus 200.

The user terminal apparatus 100 may various of types of mobile apparatuses such as a smart phone, a laptop, and a tablet PC, etc, and may be equipped with a photographing unit to photograph an object. An identification marker may be photographed through a photographing unit equipped in the user terminal apparatus 100.

An identification marker may be a two dimensional quick response (QR) code showing information, for example, in a cross stripes pattern or in a barcode. The identification marker is not limited to this in embodiments of the invention, and may, for example, be an image or a character that may be read through a user terminal apparatus. The identification marker may be printed or stuck on, but embodiments are not limited thereto.

A user may, for example, purchase an identification marker, or download and print it out. A registration process to use the identification marker may be performed through the user terminal apparatus 100. In response to the identification marker being photographed in the user terminal apparatus 100 to register the identification marker, an account may be generated, for example, in a pre-allocated server area for the identification marker. The account may be generated according to a log-in information of the user, or according to intrinsic information of the user terminal apparatus 100.

In response to the account corresponding to the identification marker being input to the server apparatus 200, the user may connect a particular content to the registered identification marker. For instance, the content may be such as an image of a newspaper and an image of a book photographed by the user directly, a video shot by the user, text, and a website address, or a document, a picture, and a video stored in the user terminal apparatus 100.

In response to the identification marker connected to the particular content being re-photographed, the content connected to the identification marker may be requested and displayed on the user terminal apparatus 100.

According to the data management system 1000, the user may use the identification marker by attaching it onto a book or a notebook, etc., e.g., a sticky note. A difference between the identification marker and the sticky note is that the sticky note has a limited space to write a memo while the identification marker may be able to store a large amount of information. In addition, a type of the information is not limited in embodiments of the invention and may be text, a picture, and a video, etc. Furthermore, after the user photographs the identification marker, the user may connect the identification marker to a content easily through a motion of photographing the content in succession, which enables a convenient data management.

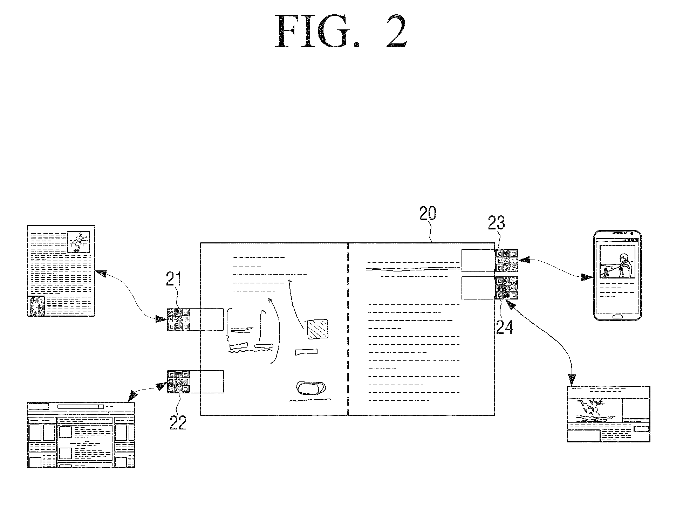

FIG. 2 is a view illustrating use of an identification marker according to an exemplary embodiment.

Referring to FIG. 2, a user may attach an identification marker to any part of the user's notebook with notes that need the identification marker.

Each identification marker may be connected to a content that may be used as a reference for the user's notes. For example, in response to an identification marker 21 on (e.g. attached on) the left top of a notebook 20 being photographed, an image of a paper photographed by a user for a reference along with notes may be provided through the user terminal apparatus 100. Similarly, in response to an identification marker 22 (e.g. attached on) on the left bottom of the notebook 20 being photographed, an image of a newspaper or a map, etc. photographed by a user for a reference along with notes may be provided through the user terminal apparatus 100. It will be appreciated that the identification marker 21 may be provided on the notebook 20 in a variety of ways.

Thus, apart from an analog content, the user may access a digital content by photographing an identification marker. For example, in response to an identification marker 23 attached on the right upper side of the notebook 20 being photographed, a pre-designated video may be played, and in response to an identification marker 24 attached on the right bottom side of the notebook 20 being photographed, the user terminal apparatus 100 may be connected to a pre-designated website address and may display the website.

According to an exemplary embodiment, an identification marker may be applied to a paper document such as a notebook. It will be appreciated that the identification marker may be provided in a variety of ways. The identification marker may be attached to an electronic device, a toy, and a natural object, etc. Since a range of use of the identification marker is varied according to a selection of a user, the present inventive concept is not limited to the exemplary embodiments described herein.

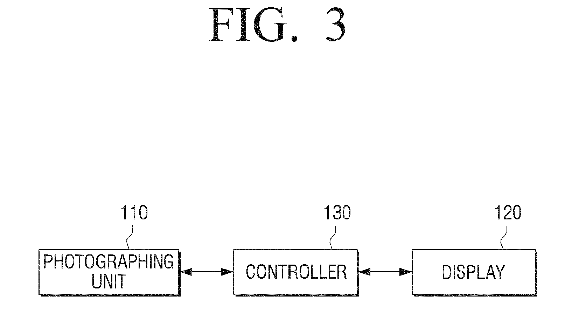

A user terminal apparatus 100 is explained with reference to FIG. 3. FIG. 3 is a block diagram illustrating the user terminal apparatus 100 according to an exemplary embodiment, and as illustrated in FIG. 3, the user terminal apparatus 100 may include a photographing unit 110, a display 120, and a controller 130.

The photographing unit 110 that is disposed on one side of the user terminal apparatus 100 may be configured to photograph an object. For example, the photographing unit 110 may include at least one or more cameras disposed on the same side with a surface the display 120 is disposed on, or the opposite side of, the surface.

The photographing unit 110 may photograph an object where an identification marker is attached to, and transmit a signal of the photographed image to the controller 130. For an accurate recognition of the identification marker, the photographing unit 110 may photograph in close-up mode (close-shot).

According to an exemplary embodiment, the photographing unit 110 may photograph a first object with an identification marker, and may photograph a second object to be connected to the first object. The first object refers to an object including an identification marker, and the second object refers to an object that includes information that a user intends to connect to the first object. Photographing the second object refers, for example, to a taking of a picture taking or a filming of a video. It will be appreciated that the identification marker 21 may be provided on the first object in a variety of ways.

The display 120 configured to display a signal-processed image may be embodied as a form of a touch panel. In response to an identification marker being photographed, the display 120 may display a second object connected to a first object.

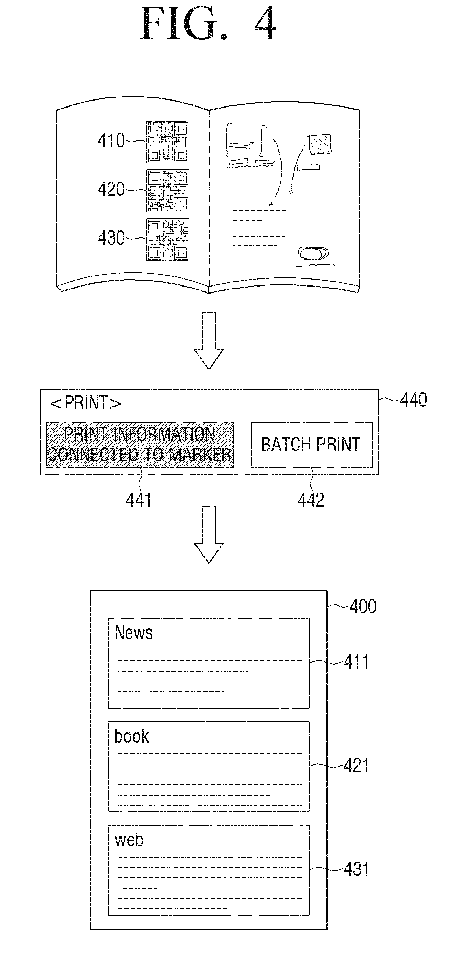

The display 120 may display a user interface (UI) to receive a command to print. In response to the command to print being input, the controller 130 may generate printing data for printing out a first object and information stored in an identification marker of the first object together, and may transmit the data to a printing apparatus (not illustrated) connected to the user terminal apparatus 100. Such printing motion is explained in detail with reference to FIG. 4.

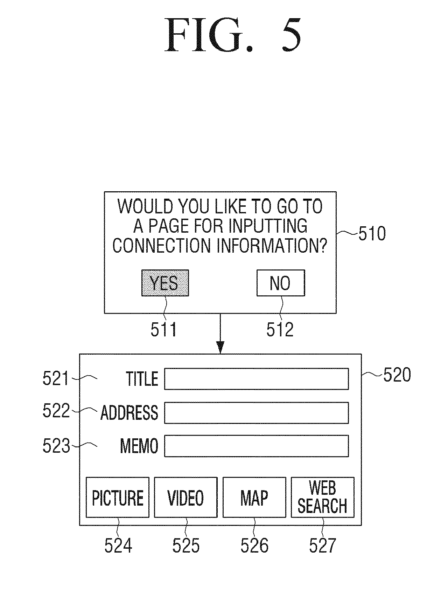

The display 120 may display a user interface (UI) to receive various types of data to be connected to a first object where an identification marker is attached to. The data may be, for example, such as text, a picture, a video, and link information on a webpage, etc. Such data input UI is explained in detail with reference to FIG. 5.

The controller 130 may be configured to control the user terminal apparatus 100, for example, an overall control. The controller 130 may generate a command to perform various types of motions of the server apparatus 200 and transmit the command to the server apparatus 200.

According to an exemplary embodiment, in response to a first object where an identification marker is attached to being photographed, the controller 130 may register an account corresponding to the identification marker in the server apparatus 200.

The controller 130 may detect identification marker information by analyzing the identification marker from a photographed image of the first object, transmit the identification marker information to the server apparatus 200, and generate an account in a pre-allocated server area for the identification marker. For example, the controller 130 may detect an identification marker part by analyzing edge information and image vector information of the identification marker in the photographed image of the first object.

The controller 130 may acquire information included in the identification marker by scanning the detected identification marker part.

According to an exemplary embodiment, an identification marker may be a QR code. A QR code that a user purchases or downloads and prints out may include only a predefined connection URL without including account information or a information value to be connected, as illustrated, for example, in the following TABLE 1.

**TABLE 1**

| Predefined QR Code | Account | Information to be connected |
|---|---|---|
| http://tinyurl.com/ljpvrjm | NULL | NULL |
| http://tinyurl.com/ljpvrjn | NULL | NULL |
| http://tinyurl.com/ljpvrjo | NULL | NULL |
| http://tinyurl.com/ljpvrjp | NULL | NULL |
| http://tinyurl.com/ljpvrjq | NULL | NULL |
| http://tinyurl.com/ljpvrjr | NULL | NULL |
| http://tinyurl.com/ljpvrjs | NULL | NULL |

In response to the QR code being photographed in the photographing unit 110, the controller 130 registers an account corresponding to the photographed QR code in the server apparatus 200. For example, in the user terminal apparatus 100, user authentication may be performed before photographing the QR code, and in response to the QR code being photographed after the authentication, the controller 130 may register an account in the server apparatus 200 by using information on the user authentication. The controller 130 may perform authentication by transmitting intrinsic information of the user terminal apparatus 100 to the server apparatus 200, and register an account corresponding to the photographed QR code in the server apparatus 200 as illustrated in TABLE 2.

**TABLE 2**

| Predefined QR Code | Account | Information to be connected |
|---|---|---|
| http://tinyurl.com/ljpvrjm | Tom | NULL |
| http://tinyurl.com/ljpvrjn | Tom | NULL |
| http://tinyurl.com/ljpvrjo | Tom | NULL |
| http://tinyurl.com/ljpvrjp | Tom | NULL |
| http://tinyurl.com/ljpvrjq | Tom | NULL |
| http://tinyurl.com/ljpvrjr | Tom | NULL |
| http://tinyurl.com/ljpvrjs | Tom | NULL |

After the registering, in response to an object (a second object) to be connected to the QR code being photographed, the controller 130 may connect a storage address of photographed data of the object to the QR code and register the address in an account as illustrated in the TABLE 3 below.

**TABLE 3**

| QR Code Info | Account | Information (Data) to be connected |
|---|---|---|
| http://tinyurl.com/ljpvrjm | Tom | https://www.dropbox.com/s/mulv310vs3dcy 07/energyjoule.jpg |
| http://tinyurl.com/ljpvrjn | Tom | NULL |
| http://tinyurl.com/ljpvrjo | Tom | NULL |
| http://tinyurl.com/ljpvrjp | Tom | NULL |
| http://tinyurl.com/ljpvrjq | Tom | NULL |

According to an exemplary embodiment, photographing a second object may be requested to be performed within a predetermined time after a first object is photographed. That is, after photographing the first object, the controller 130 may control a motion state of the user terminal apparatus 100 to be in a preparation state to photograph the second object for a predetermined time, and life the preparation state after the predetermined time passes. In response to the second object not being photographed during the preparation state, the controller 130 may control the display 120 to display an initial screen. The initial screen may be a screen to receive a control command to photograph the first object or may be a screen to receive a plurality of functions provided by the user terminal apparatus 100, for example, such as a home screen. During the preparation state, the controller 130 may control the display 120 to output a message window to lead to second photographing.

According to an exemplary embodiment, an input unit (not illustrated) of the user terminal apparatus 100 may be equipped with a button to go to an operation to photograph a second object after a first object is photographed. That is, unlike the above-described exemplary embodiments, to photograph a second object after photographing a first object, a user may photograph the second object after completing a preparation to photograph the second object without being limited by a predetermined time. In response to the display 120 being embodied as a touch panel, a button for going to the operation of photographing a second object may be included in a photographed image of a first object displayed in the display 120 after the first object is photographed. In addition, after photographing the first object, the controller 130 may control the display 120 to display a screen to receive a control command to start photographing the second object.

Thus, just through a motion of photographing a first object where an identification marker is attached to and a second object in succession, the second object may be connected to the identification marker. According to an exemplary embodiment, in response to a user wanting to connect a plurality of contents to an identification marker, photographing a second object may be performed several times. For example, in response to a plurality of second objects being photographed within a predetermined time after an identification marker is photographed, the controller 130 may store a storage address of a plurality of photographed data of the plurality of second objects in an account corresponding to the identification marker in the server apparatus 200. After a second object is photographed for the first time, the controller 130 may control the display 120 to display a screen or a button to receive a control command to start photographing another second object.

In response to the identification marker being re-photographed, the controller 130 may acquire photographed data by using a storage address of the photographed data of the second object stored in an account, and may display the photographed data. For example, in response to a QR code for a pre-allocated link address http://tinyurl.com/ljpvrjm being photographed through the photographing unit 110, the controller 130 may control the display 120 to display a linked image at, for example, <<https://www.dropbox.com/s/ mulv310vs3dcy07/energyjoule.jpg>>.

In response to photographed data of a plurality of second objects corresponding to an identification marker being stored in an account, and the identification marker being re-photographed, the controller 130 may display photographed images of the plurality of second objects through the display 120 in order, or may display a thumbnail of the photographed images of the plurality of second objects through the display 120.

According to an exemplary embodiment, in response to a command to initialize an account being input, the controller 130 may delete data of information to be connected stored as above. That is, an identification marker may be recycled.

According to an exemplary embodiment, in response to a command to print being input, the controller 130 may print out a photographed image of a first object and a photographed image of a second object as a whole or individually by using a printing apparatus connected to the user terminal apparatus 100.

For example, referring to FIG. 4, identification markers 410, 420, and 430 may be attached to a notebook. In response to the identification markers 410, 420, and 430 being photographed, a user interface (UI) 440 to receive a command to print is automatically displayed on the display 120. In addition, only in response to settings of printing existing before photographing, the UI 440 to receive a command to print may be displayed. The UI 440 to receive a command to print may include a marker-connected information printing button 441 and a batch printing button 442.

In response to the marker-connected information printing button 441 being selected, the controller 130 may generate printing data to batch output images connected respectively to the identification markers 410, 420, and 430, and transmit the printing data to a printing apparatus. The printing data may be generated by using a printing application programming interface (AIP) stored in the user terminal apparatus 100. The printing apparatus may output paper 400 that includes images 411, 421, and 431 corresponding to the identification markers 410, 420, and 430.

In response to the batch printing button 442 being selected, the controller 130 may generate printing data to output photographed images respectively connected to the identification markers 410, 420, and 430 along with photographed notebook images, and may transmit the printing data to the printing apparatus. In addition, the printing apparatus outputs the paper 400 that includes the images 411, 421, and 431 respectively corresponding to the identification markers 410, 420, and 430 and the notebook images.

According to a setting of a user, the controller 130 may generate printing data by inserting the marker-connected images in a part of the notebook where each of the identification markers is attached to, or may generate the printing data to separate and output the marker-connected images and the notes of the notebook.

According to an exemplary embodiment, in response to data to be connected to a first object being input, the controller 130 may store the input data in an account, and in response to an identification marker being re-photographed, may display the input data.

For example, referring to FIG. 5, in response to an identification marker being photographed, the controller 130 may display a user interface (UI) 510 that receives a choice whether to go to a page for inputting connection information. In response to a transfer to the page for inputting connection information being selected 511, a data input user interface (UI) 520 may be displayed.

For example, input data may be text, a link address, a picture, and a video, etc. The data input UI 520 may include a title area that may receive a name of an identification marker, an input area 522 of an URL address to be connected to the identification marker, and a memo area 523. A picture or a video, etc. stored in the user terminal apparatus 100 may be connected to the identification marker, and The data input UI 520 may include a picture selection button 524 and a video selection button 525. Map information may be connected to the identification marker, and in response to a map button 526 included in the data input UI 520 being selected, a map search page may be connected via the Internet, and information on a selected area may be connected to the identification marker. In addition, in response to a web search button 527 being selected, a portal site may be connected, and a user-searched webpage address may be connected to the identification marker.

In response to data to be connected to a first object being input, the controller 130 stores the input data in a user account of the server apparatus 200. In response to an identification marker being re-photographed, the input data may be displayed. For instance, in response to an identification marker being re-photographed, a screen may be changed to a webpage corresponding to an URL address a user inputs, memo text the user inputs may be displayed, and a picture and a video the user designates to connect to the first object may be requested from a storage (not illustrated) in the user terminal apparatus 100 and may be displayed. In response to the identification being re-photographed, map search information or a searched webpage may be displayed.

According to the user terminal apparatus 100, each analog document being separated may be connected, and even in an environment where an analog document and a digital document are used together, each of the documents may be connected with each other. After photographing an identification marker, an automatic connection may be performed immediately only through inputting or photographing data to be connected.

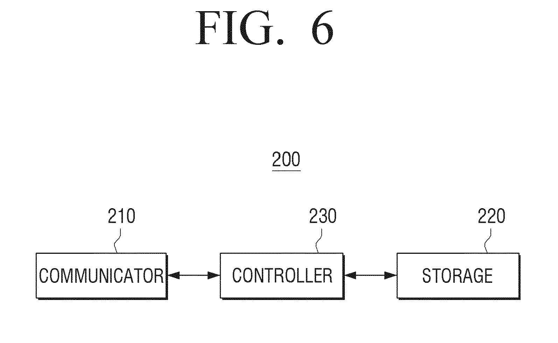

A server apparatus 200 according to an exemplary embodiment is explained with reference to FIG. 6. Referring to FIG. 6, the server apparatus 200 may include a communicator 210, a storage 220, and a controller 230.

The communicator 210, which is configured to connect the server apparatus 200 with the user terminal apparatus 100 through a network, may transmit and receive various types of data. The communicator 210 may receive identification marker information, user recognition information, or intrinsic information of the user terminal apparatus 100 from the user terminal apparatus 100, and may receive a command to initialize an account inputted from the user terminal apparatus 100.

The storage 220, which is configured to store various types of programs necessary to perform a motion of the server apparatus 100, stores a storage address of data connected to each identification marker or stores the data connected to each identification marker. Various types of data stored by user account in the storage 220 may be deleted or edited according to a command to initialize the account inputted from the user terminal apparatus 100.

The controller 230, which is configured to control overall motions of the server apparatus 200, may generate an account corresponding to an identification marker in a pre-allocated server area according to a command received from the user terminal apparatus 100.

For example, a command received from the user terminal apparatus 100 may include identification marker information, user information, or intrinsic information of the user terminal apparatus 100. A pre-allocated area for each identification marker exists in the server apparatus 100, and the controller 230 may generate an account according to the user information received with the identification marker information or intrinsic information of the user terminal apparatus 100.

The controller 230 may store a storage address of photographed data of a second object in an account corresponding to an identification marker according to a command received from the user terminal apparatus 100. The controller 230 may analyze the identification marker information received from the user terminal apparatus 100 and analyze whether the identification marker information matches a registered identification marker. In response to the result of the analysis that the received identification marker is the registered marker without connected information, the storage address of the photographed data of the second object is received and stored in an account corresponding to the identification marker. According to an exemplary embodiment, photographed data of a second object itself may be stored in the account.

In response to the result of an analysis of the identification marker information received from the user terminal apparatus 100 that the received identification marker is a registered marker with connected information, the controller 230 transmits the connected information to the user terminal apparatus 100. According to an exemplary embodiment, the controller 230 performs authentication by receiving intrinsic information of the user terminal apparatus 100, and transmits information connected to the identification marker to the user terminal apparatus 100 only in response to the authentication result matching.

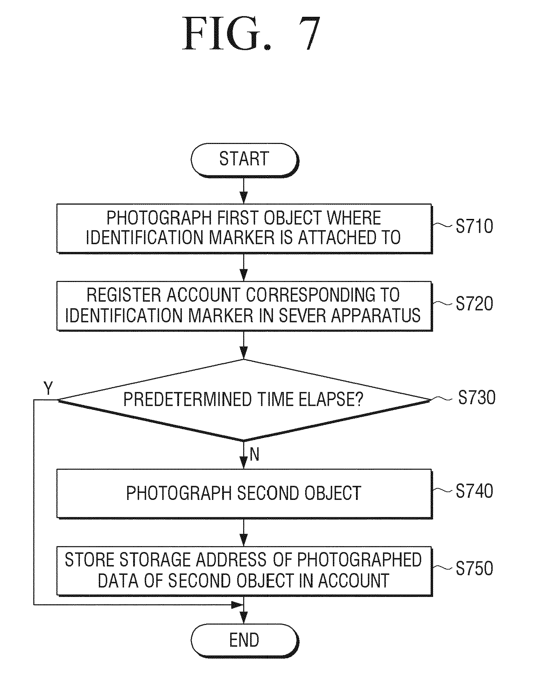

FIG. 7 is a flow chart illustrating a method of connecting data of a user terminal apparatus according to an exemplary embodiment.

Referring to FIG. 7, a first object where an identification marker is attached to is photographed (S710). The photographing unit 110 of the user terminal apparatus 100 may be equipped to function as a camera, and may detect an identification marker by analyzing a photographed image of the first object. The controller 130 of the user terminal apparatus 100 may acquire information included in the identification marker.

An account corresponding to the identification marker may be registered in a server apparatus (S720). A pre-allocated server area by identification marker exists in the server apparatus 200, and in response to user information with identification marker information, or intrinsic information of the user terminal apparatus 100 being received from the user terminal apparatus 100, the server apparatus 200 may register an account corresponding to the identification marker in the server apparatus 200.

The controller 130 determines whether a pre-determined time elapses after the first object is photographed (S730). In response to a second object to be connected to the first object not being photographed during the pre-determined time, the controller 130 may control the display 120 to display an initial screen. In response to the second object being photographed during the pre-determined time (S740), a storage address of photographed data of the second object is stored in an account corresponding to the identification marker (S750). The photographed data of the second object may be stored in the server apparatus 200 or in another cloud server simultaneously while being photographed, and a storage address of the photographed data of the second object may be stored in an account corresponding to the identification marker. According to an exemplary embodiment, photographed of a second object itself may be stored in an account corresponding to an identification marker.

In response to the identification marker being re-photographed, the server apparatus 200 checks an account corresponding to the identification marker by receiving information of the re-photographed identification marker, and transmits a storage address of the photographed data of the second object stored in the account to the user terminal apparatus 100.

The user terminal apparatus 100 acquires the photographed data of the second object by using the storage address of the photographed data of the second object, and displays the photographed data of the second object.

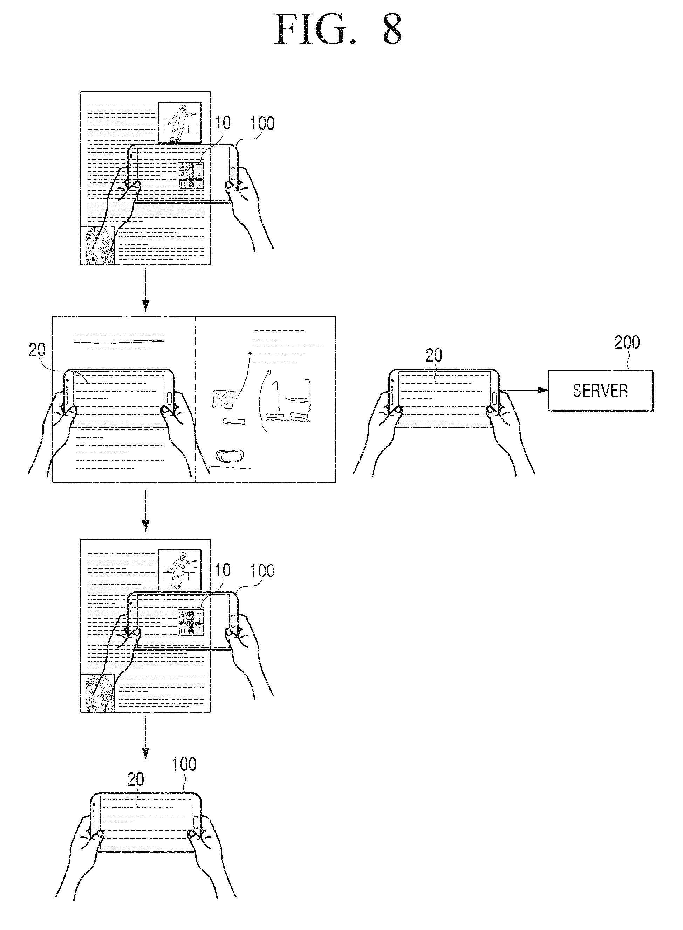

The data connection may be performed immediately after the registering an identification marker. However, according to an exemplary embodiment, connecting a content to an identification marker may be performed at a longer duration from the registering an identification marker. (See, for example, FIG. 8).

An identification marker of FIG. 8 is a registered identification marker that is prepared, e.g., completely prepared for a content connection.

As illustrated on the top of FIG. 8, in response to a first object where an identification marker 10 is attached to being photographed by a user, the user terminal apparatus 100 enters a preparation state to receive a content to be connected to the identification marker 10. In response to a second object 20 to be connected to the first object being photographed in the preparation state, photographed data of the second object 20 is stored in the server 200 or another cloud server.

A storage address of the photographed data of the second object 20 may be stored in an account corresponding to the identification maker 10.

As illustrated in FIG. 8, in response to the identification marker 10 being re-photographed by the user, the second object 20 may be displayed in the user terminal apparatus 100 by using photographed data of the second object 20 stored in the account.

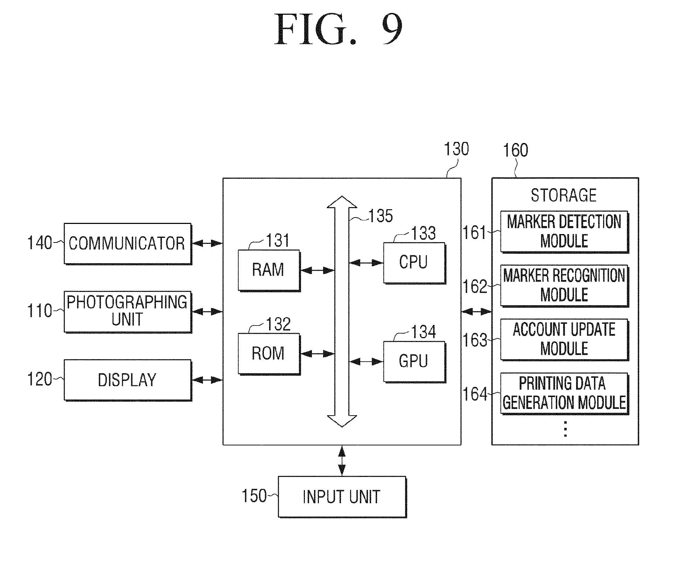

FIG. 9 is a block diagram illustrating the user terminal apparatus 100 according to an exemplary embodiment. Referring to FIG. 9, the user terminal apparatus 100 may include the photographing unit 110, the display 120, the controller 130, the communicator 140, the input unit 150, and the storage 160.

However, FIG. 9 is a view illustrating various types of elements in an example in which the user terminal apparatus 100 is an apparatus equipped with various functions such as communicating, photographing, and displaying, etc. According to an exemplary embodiment, some of the elements illustrated in FIG. 9 may be omitted or changed, or another element may be added.

The photographing unit 110, which is disposed on a part of the user terminal apparatus 100, may be configured to photograph an object. For example, the photographing unit 110 may include at least one or more cameras disposed on the same side with a surface where the display 120 is disposed on, or the opposite side of the surface.

The photographing unit 110 may photograph an object where an identification marker is attached to, and transmit a signal of the photographed image to the controller 130. For an accurate recognition of the identification marker, the photographing unit 110 may perform photographing in close-up mode (close shot).

The display 120 displays at least one of various screens generated in a graphics processing unit (GPU) 134. For example, a user interface (UI) to receive a command to print or a user interface (UI) to receive various types of data to be connected to a first object may be displayed. Such display 120 displays image data according to a control of the controller 130. The display 120 may be embodied as a form of a touch panel integrated with the input unit 150.

The communicator 140 may be configured to communicate with various types of external devices or external servers according to various types of communication methods. The communicator 140 may transmit and receive various types of data with the server apparatus 200.

The communicator 140 may include various types of communication chips such as a WiFi chip, a Bluetooth chip, a near field communication (NFC) chip, and a wireless communication chip, etc. The Wifi chip, the Bluetooth chip, and the NFC chip perform communication in Wifi, Bluetooth, and NFC manners respectively. The NFC chip refers to a chip performing in the NFC manner that uses a band of 13.56MHz among various types of RF-ID frequency bands such as 135kHz, 13.56MHz, 433MHz, 860∼960MHz, and 2.45GHz. The WiFi chip or the Blutooth chip may transmit or receive various kinds of connection information such as subsystem identification (SSID) and a session key for communication and receive various kinds of information. The wireless communication chip refers to a chip performing communication according to various types of communication standards such as Institute of Electrical and Electronics Engineers (IEEE), Zigbee, 3G (3rd Generation), 3GPP (3rd Generation Partnership Project), and LTE (Long Term Evolution).

The input unit 150 may be configured to receive a user command for controlling overall motions of the user terminal apparatus 100. For example, the input unit 150 may be embodied in a various way such as a touch-detection sensor of a touch panel, a motion sensor detecting motions, a voice sensor detecting a user's voice, etc.

The storage 160 stores various types of modules for operating the user terminal apparatus 100. For example, software including a base module, a sensing module, a communication module, a presentation module, a web browser module, and a server module may be stored in the storage 160. The base module is a base module that processes signals received from each of hardware included in the user terminal apparatus 100 and transmits the signals to the upper layer module. The sensing module, which collects information from each sensor, and analyze and manage the collected information, may include a face recognition module, a voice recognition module, a motion recognition module, and a NFC recognition module, etc. The presentation module, which is for configuring a display screen, may include a multi-media module for playing and outputting a multi-media content, and a user interface (UI) rendering module for processing an UI and graphics. The communication module is for communicating with the outside. The web browser module refers to a module that accesses a web server by performing web-browsing. The service module includes various types of applications for providing various types of services.

The storage 160 may store a marker detection module 161 for detecting an identification marker from an image photographed in the photographing unit 110, a marker recognition module 162 for recognizing the detected identification marker, an account update module 163 for in response to a command to initialize an account corresponding to the identification marker of the server apparatus 200 being input, deleting data stored in the account, and a printing data generation module 164 for in response to a command to print being input, generating printing data for printing out data connected to the identification marker. According to an exemplary embodiment, a control module may be embodied as software stored in the storage 160, but may be embodied as separate hardware respectively.

The controller 130 controls motions, e.g., overall motions of the user terminal apparatus 100 by using all types of programs stored in the storage 160.

The controller 130, as illustrated in FIG. 9, may include a random access memory (RAM) 131, a read only memory (ROM) 132, a central processing unit (CPU) 133, and a graphic processing unit (GPU) 134. The RAM 131, the ROM 132, the CPU 133, and the GPU 134 may be connected with each other through a bus 135.

A set of commands for booting a system may be stored in the ROM 132. In response to a turn-on command being input and power being supplied, the CPU 133 copies an operating system (O/S) stored in the storage 160 onto the RAM 131, and boots a system by executing the O/S according to a command stored in the ROM 132. In response to the booting being completed, the main CPU 133 may copy various types of application programs stored in the storage 160 onto the RAM 131, and perform types of motions by executing the application programs copied onto the RAM 131.

The GPU 134 generates a screen that includes various objects such as an icon, an image, and text by using an operation part (not illustrated) and a rendering part (not illustrated). The operation part calculates attribute values such as a coordinate value, a form, a size, and a color, etc. of each object to be displayed according to a layout of a screen by using a control command received from the input unit 150. The rendering part generates a screen in various layouts including an object based on the attribute value calculated from the operation part. The screen generated from the rendering part is displayed within a display area of the display 120.

In response to an identification marker being photographed through the photographing unit 110, the controller 130 determines whether the identification marker is a registered one or not by communicating with the server apparatus 200 through the communicator 140, in response to the identification marker being not a registered one, the controller 130 performs a registration process, and in response to the identification marker being a registered one, the controller 130 determines whether data is stored in an account corresponding to the identification marker. In response to data being stored in the account, the controller 130 summons the data and displays the data through the display 120. In response to the data not being stored, the controller 130 receives data to be connected to the identification marker and stores the received data in the account.

As discussed, embodiments of the invention provide a method of managing data of a user terminal apparatus, comprising: photographing a first object with an identification marker; registering an account corresponding to the identification marker in a server apparatus; and in response to a second object to be connected with the first object being photographed within a predetermined time after the first object is photographed, storing a storage address of photographed data of the second object in an account corresponding to the identification marker. The first object may be provided on the first object in a number of different ways (e.g. printing or sticking).

A method of managing data of a user terminal apparatus according to various exemplary embodiments is software that may be coded and stored in a non-transitory readable medium. The non-transitory readable medium may be equipped in various types of apparatuses and used.

The non-transitory computer readable medium may refer to a medium that is capable of storing data semi-permanently and reading the data by an apparatus. The non-transitory computer readable medium may be such as a compact disc (CD), a digital versatile disk (DVD), a hard disk, a Blu-ray disk, a universal serial bus (USB), a memory card, and a read only memory (ROM).

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method of managing data of a user terminal apparatus, comprising:
photographing a first object with an identification marker;
registering an account corresponding to the identification marker in a server apparatus; and
in response to a second object to be connected with the first object being photographed within a predetermined time after the first object is photographed, storing a storage address of photographed data of the second object in an account corresponding to the identification marker.

2. The method as claimed in claim 1, further comprising:
in response to the identification marker being re-photographed, acquiring photographed data of the second object by using the storage address stored in the account, and displaying the photographed data of the second object.

3. The method as claimed in claims 1 or 2, wherein the registering an account in a server apparatus comprises:
detecting identification marker information by analyzing the identification marker from a photographed image of the first object; and
transmitting the identification marker information to the server apparatus, and generating the account in a server area pre-allocated for the identification marker.

4. The method as claimed in claim 3, further comprising:
performing authentication by transmitting intrinsic information of the user terminal apparatus to the server apparatus.

5. The method as claimed in any one of claims 1 to 4, further comprising:
in response to a command to print being input, printing a photographed image of the first object and a photographed image of the second object as a whole by using a print apparatus connected to the user terminal apparatus.

6. The method as claimed in in any one of claims 1 to 5, further comprising:
in response to data to be connected to the first object being input, storing the input data in the account; and
in response to the identification marker being re-photographed, displaying the input data.

7. The method as claimed in in any one of claims 1 to 6, further comprising:
in response to link information on a webpage to be connected to the first object being input, storing the input link information in the account; and
in response to the identification marker being re-photographed, displaying the webpage corresponding to the input link information.

8. A user terminal apparatus, comprising:
a photographing unit configured to photograph a first object with an identification marker;
a controller configured to register an account corresponding to the identification marker in a server apparatus; and
wherein in response to a second object to be connected to the first object being photographed within a predetermined time after the first object is photographed, the controller stores a storage address of photographed data of the second object in an account corresponding to the identification marker.

9. The apparatus as claimed in claim 8, further comprising:
a display; and
wherein in response to the identification marker being re-photographed, the controller is arranged to acquire photographed data of the second object using the storage address stored in the account, and to control the display to display the photographed data of the second object.

10. The apparatus as claimed in claims 8 or 9, wherein the controller is arranged to detect identification marker information by analyzing the identification marker from a photographed image of the first object, to transmit the detected marker information to a server apparatus, and to generate the account in a pre-allocated server area for the identification marker.

11. The apparatus as claimed in claim 10, wherein the controller is arranged to perform authentication by transmitting intrinsic information of the user terminal apparatus to the server apparatus.

12. The apparatus as claimed in any one of claims 8 to 11, wherein in response to a command to initialize the account being input, the controller is arranged to delete data stored in the account.

13. The apparatus as claimed in any one of claims 8 to 12, wherein in response to a command to print being input, the controller is arranged to print a photographed image of the first object and a photographed image of the second object en bloc by using a print apparatus connected to the user terminal apparatus.

14. The apparatus as claimed in in any one of claims 8 to 13, wherein in response to data to be connected to the first object being input, the controller is arranged to store the input data in the account, and in response to the identification marker being re-photographed, to display the input data.

15. The apparatus as claimed in in any one of claims 8 to 14, wherein in response to link information on a webpage to be connected to the first object being input, the controller is arranged to store the input link information in the account, and in response to the identification marker being re-photographed, to display the webpage corresponding to the input link information.
